Europäisches Patentamt

European Patent Office

Office européen des brevets

(19)

(11) Publication number : **0 445 858 B1**

(12) # EUROPEAN PATENT SPECIFICATION

(45) Date of publication of patent specification :
**26.05.93 Bulletin 93/21**

(51) Int. Cl.⁵ : **H02G 1/08,** G02B 6/44

(21) Application number : **91200342.3**

(22) Date of filing : **19.02.91**

(54) **Method and pulling plug for installing a cable in a cable conduit.**

The file contains technical information
submitted after the application was filed and
not included in this specification

(30) Priority : **27.02.90 NL 9000462**

(43) Date of publication of application :
**11.09.91 Bulletin 91/37**

(45) Publication of the grant of the patent :
**26.05.93 Bulletin 93/21**

(84) Designated Contracting States :
**AT BE CH DE DK ES FR GB GR IT LI LU NL SE**

(56) References cited :
**EP-A- 0 029 037
EP-A- 0 108 590
EP-A- 0 152 720**

(56) References cited :
**EP-A- 0 221 481
EP-A- 0 251 129
EP-A- 0 264 767
EP-A- 0 287 225
DE-A- 3 220 286
DE-A- 3 616 627
US-A- 4 185 809
US-A- 4 648 744
JOURNAL OF LIGHTWAVE TECHNOLOGY,
vol. 7, no. 2, February 1989, pages 297-302,
IEEE, New York, US; W. GRIFFIOEN: "The
installation of conventional fiber-optic cables
in conduits using the viscous flow of air"**

(73) Proprietor : **Koninklijke PTT Nederland N.V.
P.O. Box 95321
NL-2509 CH The Hague (NL)**

(72) Inventor : **Griffioen, Willem
180, Hoogerheidestraat
NL-2461 XJ Ter Aar (NL)**

EP 0 445 858 B1

Jouve, 18, rue Saint-Denis, 75001 PARIS

## Description

### A. Background of the invention

#### 1. Field of the invention

The invention is in the field of installing a cable in a tubular cable conduit. More particularly, the invention comprises an improved method for installing a cable in a cable conduit with the aid of the drag forces of a flowing gaseous medium and a pulling plug for carrying out such a method.

#### 2. Discussion of background

References [3], [4] and [5] (see under B.) disclose a first type of installation methods with which a cable can be installed in a conduit with the aid of drag forces exerted on the cable by a gaseous medium, such as compressed air, flowing along rapidly. In this case, where the cable is fed into the pressurised space from the ambient pressure, a pressure difference occurs. According to this known technique, this pressure difference is compensated for near the place where it occurs by feeding the cable into the pressurised space with mechanical (references [3] and [5]) or hydrodynamic (reference [4]) means. From reference [5] it is, in addition, furthermore known to subject cables having a certain stiffness to an additional pushing force near the conduit entrance in order to compensate for a deficiency of drag forces in an initial part of the conduit, as a result of which larger installation lengths can be achieved in one fell swoop. The advantage of these known methods of the first type is that the drag forces exerted on the cable and having the effect of tensile forces are in general sufficiently equally distributed over the entire length of the cable. Nevertheless it has been found that installation is sometimes fairly suddenly hampered by upsetting or buckling. This appears to occur, inter alia, in the case of somewhat stiff cables which may have so-called intrinsic curvatures, that is to say they have the tendency to move in a curved manner, especially at the position of the foremost cable end. This results in an increased friction between cable and inside wall of the conduit and increases the risk of upsetting during the installation process. In a second type of known methods for the installation of cables in cable conduits, a tensile force is generally exerted on the foremost end of the cable. This can be achieved, for example, with a winching wire introduced beforehand into the conduit and attached to the cable and, as known from reference [1], or with the aid of a pulling plug attached to the cable end, which plug provides, in the conduit, a suction seal to the conduit and is energised with compressed air supplied from the feed-in end of the conduit, as known from reference [2]. Installation methods of this second type have the advantage that, by their nature, they do not suffer from the buckling effect, while, in addition, the foremost cable end is always guided in the right direction. In addition, a pulling plug energised by compressed air has the advantage of an implicit pressure drop compensation at the conduit feed-in end. It is true that these ways of installation have the disadvantage that, as a consequence of the cable tension present, the tensile force required may start to increase rapidly in the bends and undulations virtually always present in the cable conduit. This forms, in general, the limitation of the length of a cable to be installed in one piece in this way. A combination of the principles of both types of installation methods which could eliminate the disadvantages of each type separately and could possibly result themselves in an improved method with which still greater installation lengths could be achieved in one fell swoop is not readily possible. In such a combination, a winching device at the conduit removal end requires additional protective measures against the stream of air flowing out at high velocity and, in addition, a good coordination with the cable feed equipment at the conduit feed-in end. In addition it is necessary, as an additional step, for a winching wire to be introduced into the conduit beforehand from the conduit feed-in end. The known pulling plugs energised with compressed air, which have to seal the duct as well as possible for a satisfactory operation, render a flow of air of any significance along the cable impossible in principle.

Reference [6] discloses an installation method which uses a pulling plug energised with compressed air, and in which the degree of sealing with the inside wall of the conduit can vary as the result of the presence of an inflatable body in a manner such that said sealing increases as the pulling plug delivers a greater tensile force to the cable. However, it has been found experimentally that a pulling plug which does not adjoin the conduit inside wall circumferentially completely in a suction manner has to have, if it is not always to jam as a result of variations in the inside diameter of the conduit, a diameter which is so much smaller than the said inside diameter that only very low tensile forces can be delivered to the foremost end of the cable with the compressed air energisation. This means that a pulling plug provided with an inflatable body as disclosed by reference [6] cannot be used to achieve the combination of the two types of installation methods in a suitable way. Reference [7] discloses a more sophisticated example of installation methods of the second type using two types of pulling plugs energisable by compressed gaseous medium, i.e. a conventional one to be coupled to the foremost end of a cable to be installed, and so called intermediate pulling plugs connected around the cable on regular mutual distances. Both the intermediate plug and the foremost plug are provided with means for maintaining a circumferential suction seal with the inside wall of the conduit. The intermediate plug has moreover a permeability for compressed air, which dependents on the tensile force experienced by the preceeding part of the cable and exerted by one or more of the preceeding pulling plugs during installation. The permeability for the compressed gaseous medium is maximal with zero tensile force, and evanishes wit increasing tensile force in the installation direction. Therefore compressed air can pass an intermediate plug for energizing a preceeding plug, as long as the preceeding plug is energized insufficiently for exerting a tensile force on the cable large enough to be experienced in the intermediate plug.

## B. References

[1] European Patent Publication EP 0,152,720 entitled: Dispositif de commande d'un transporteur intermédiaire (Control device of an intermediate transporter);

[2] European Patent Publication EP 0,251,129 entitled: Verfahren und Vorrichtung zum Einziehen von Kabel, insbesondere von Glasfaserkabel in ein Rohr (Method and device for pulling cable, in particular glass fibre cable into a tube);

[3] European Patent Publication EP 0,108,590 entitled: Optical fibre transmission lines;

[4] European Patent Publication EP 0,287,225 entitled: Optical fibre installation;

[5] W. Griffioen, "The installation of conventional fiber-optic cables in conduits using the viscous flow of air", in journal of Lightwave Technology, Vol. 7, No. 2, February 1989, pages 297 - 302;

[6] US Patent Publication US 4,648,744 entitled: Method and apparatus for positioning optical fibers in a buried conduit;

[7] German Patent application DE 3220286 A1 entitled: Verfahren zum Einziehen von Übertragungselementen mittels Druckluft und Einrichtung zur Durchführung des Verfahrens.

## C. Summary of the invention

One object of the invention is to provide for an improved installation method of the first type of installation methods as indicated above, which method achieves said combination. A further object of the present invention is to provide a pulling plug for carrying out the installation method. A method for installing a cable into a conduit with the aid of drag forces of a gaseous medium, which is inserted at the feed-in end of the conduit and which flows rapidly along the cable to a removal end of the conduit, which method is according to the invention characterized by the steps of connecting to a foremost end of the cable, by means of a coupling of high tensile strength, a leaky pulling plug of a design permitting the gaseous medium to leak therethrough with creation of a pressure difference between forward and rear faces of the pulling plug during the rapid flow of the gaseous medium, inserting the leaky pulling plug and the foremost cable end into the feed-in end of the conduit, and advancing the cable into the conduit by generating a rapid flow of the gaseous medium from the feed-in end of the conduit along the cable through the leaky pulling plug and out through the removal end of the conduit, while thereby exerting the drag forces on the cable in the conduit and exerting tensile forces on the foremost cable end as a consequence of the pressure difference at the pulling plug, which tensile forces assists the drag forces. The present invention is based on the insight, that during installation a small fraction of the total pressure difference available between the feed-in and removal ends of the conduit can be used for creating an additional tensile force at the foremost end of the cable being installed in order to guide better the foremost end in the installation direction and moreover to assist the drag forces exerted by the rapidly flowing medium along the cable.

For carrying out the method according to the invention, a pulling plug comprising a mainly tubular housing, coupling means for a tension-proof coupling to a foremost end of a cable to be installed, sealing means for a circumferential suction seal with the inside wall of the conduit, provided around said housing, and a leaking aperture within said housing, which pulling plug is of a sort as already known from reference [7], i.c. the above discussed intermediate pulling plug, is according to the invention characterized in that the leaking aperture has a leaking capacity for allowing a flow of said gaseous medium along the part of the cable already introduced into the conduit during installation for exerting said drag forces on said part of the cable, with the creation of said pressure difference for energisation of the pulling plug resulting in said tensile force on the foremost end of the cable.

Moreover, a pulling plug which seals well with respect to the conduit and which has a comparatively - i.e. with respect to the conduit cross-section - small hole as leaking aperture in the pulling plug was already'found, experimentally, to result in a powerful air flow along the cable, including its associated drag action distributed over the length of the cable. Said aperture is, however, subject to limits. On the one hand, the hole has to be large enough to allow through sufficient air flow to maintain the drag action on the cable and, on the other hand, the hole must at the same time not be too large in order to leave sufficient tensile force over at the foremost end of the cable. In a preferred embodiment, the leaking aperture is for this purpose accurately- matched beforehand to the installation parameters such as working pressure and the conduit and cable parameters, such that during installation in the leaking aperture the flow velocity of the gaseous medium, at least approximately, equals the velocity of sound in that gaseous medium. In another preferred embodiment, the pulling plug is provided with pressure-dependent adjustment means which vary the size of the leaking aperture during installation. Further preferred embodiments of both the method and the pulling plug according to the invention are summarised in the other sub claims.

## D. Brief description of the drawing

The invention will be explained in greater detail with reference to a drawing, wherein:

Figure 1 shows a diagrammatic representation for the purpose of explaining in greater detail the cable installation method according to the invention;

Figure 2 shows a pulling plug according to the invention:
a) housing and connecting piece of a first variant;
b) a connecting piece, connectable to the housing according to a), of a second variant;
c) the same for a third variant.

## E. Description of exemplary embodiments

Appendix II of reference [5] gives a differential equation (equation [14]) for the force variation in the longitudinal direction of the conduit, for cable installation with the aid of air flowing rapidly along the cable. In this, effects as a consequence of cable weight and cable tension, and of the buckling of the cable are correlated with effects as a consequence of the air flow. If a cable inherently has a certain stiffness, the additional friction which this results in between cable and conduit can be allowed for in the cable weight. With the aid of said equation, it is possible to calculate a theoretical maximum installation length for given specific installation parameters, method of pressure drop compensation and any additional pushing force at the conduit feed-in end. In practice, this maximum installation length was not always achieved. The following effect, at least concomitantly, was found to be responsible for this.

The said effect occurs if, during installation, a somewhat stiff cable exhibits, in addition, intrinsic curvatures, which indicates that the cable has the tendency to pull in a bent manner. Such a tendency may be the consequence of the cable construction, but may also be the consequence of long-term storage in the bent state such as, for example, on a cable reel. Such intrinsic curvatures in the cable contribute to the friction between cable and conduit only at those points where a change in the curvature is enforced by the conduit and this is, at least in a straight conduit, but also approximately in a conduit with bends and undulations, only the case at the ends of the cable in the conduit. At one end, that is at the conduit feed-in end, this contribution can be compensated for in a simple manner, for example simultaneously with the pressure drop compensation. An intrinsic curvature can, however, bring about in situ at the foremost end of the cable an additional contribution to the friction which, as a consequence of the fact that it is localised exclusively at the foremost end, cannot be compensated for by said drag forces. The effect of this additional contribution to the friction is the greatest when the foremost cable end has approached a critical point in the conduit, namely the point where the flowing compressed air precisely compensates for the friction as a consequence of the cable weight, including the said small increase thereof as a consequence of the stiffness (Note: that is to say, therefore, for dF = 0 in the 'equation' (14) cited above from Appendix II of reference [5]). There is consequently an appreciably increased risk of "buckling" at that instant during the installation. The additional contribution to the friction at the foremost end of the cable as a consequence of an intrinsic curvature results in a force $F_{ic}$ which opposes the movement of the cable and which can be approximated well by:

$$F_{ic} = fB\{(3aR_c^3)^{1/2}\}^{-1} \quad (1).$$

Here:

$R_c =$ bending radius of an intrinsic cable curvature,

$f =$ coefficient of friction between cable and conduit,

$a =$ difference in the cross-sectional radii of the conduit and the cable,

$B =$ stiffness of the cable.

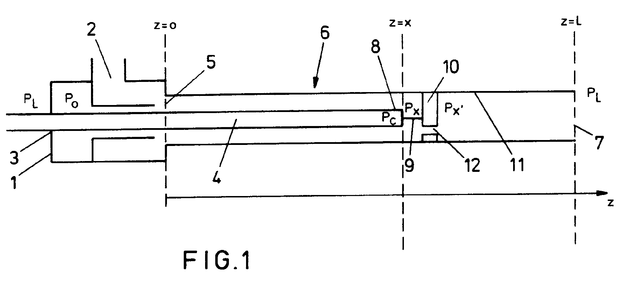

According to the invention, the compressive force $F_{ic}$ is at least compensated for by exerting tensile forces on the foremost end of the cable, while the drag action of the air flowing along the cable in the conduit nevertheless essentially continues to be maintained. Said compensation is preferably a slight overcompensation in order to pass the critical point, where dF = 0, more easily with a small additional tensile force. These features will be explained in more detail with the aid of Figure 1. A cable feed-in unit 1 having a first feed-in opening 2 for compressed air and a second feed-in opening 3 for a cable 4 to be installed is coupled to a feed-in end 5 of a cable conduit 6. The conduit 6 has a length L. Compressed air and cable 4 move in a z direction from the feed-in end 5 at z = 0 to a removal end 7 of the conduit 6 at z = L. In the conduit there is a z-dependent pressure. It is assumed that, in the cable feed-in unit 1, there is a pressure $P_0$ which is equal to that in the feed-in end 5 at z = 0, and that, near the removal end 7 at z = L, there is a pressure $P_L$ which is equal to the external pressure which surrounds the feed-in unit 1. The surrounding pressure of the foremost end 8 of the cable 4 in the conduit 6 at the point to which (z = x) the cable has been conveyed at a particular instant during installation is indicated by $P_x$. When the cable 4 is introduced into the feed-in opening 3 of the feed-in unit 1, the cable experiences a pressure difference that results in an opposing force $F_{pd}$ which, in the known technique cited above, is overcome by mechanical or hydrodynamic means in the direct vicinity of the feed-in opening 3. Connected to the foremost end 8 by means of a tension-proof coupling 9 is a pulling plug 10. Said pulling plug 10 makes suction contact circumferentially with the inside wall 11 of the conduit 6 and is furthermore provided with a flow opening 12, as a result of which it is partially leaky. The flow opening 12 is so dimensioned that, on the one hand, an air flow can take place, through said opening, which has a volume per unit time such that the flow velocity of the air along the cable is not appreciably reduced by the presence of the pulling plug 10, and that, on the other hand, a certain pressure difference $P_x - P_x'$ is maintained across the pulling plug, as a result of which the pulling plug is energised, resulting in a tensile force $F_p$ on the foremost end 8 of the cable which is at least large enough to compensate for the compressive force $F_{lc}$. In practice, a very usable partially leaky pulling plug is found to be obtained if, assuming an opening having an essentially circular cross-section, the radius $r_h$ thereof is determined from the following equation:

$$\Phi_v = 0,58 * \pi r_h^2 P_o c_o \quad (2).$$

Here:

$\Phi_V$ = the estimated volumetric flow of the flowing medium in the conduit without cable, with given conduit and compressor parameters;

$r_h$ = radius of the flow opening 12;

$P_0$ = the pressure in the cable feed-in unit 1;

$c_0$ = the speed of sound in the flowing medium under atmospheric conditions.

That is to say, the size of the flow opening is chosen in a manner such that the shock wave condition is fulfilled, which is to say that a pressure difference at which a shock wave is produced in the opening is able to exist in the conduit across the pulling plug, at least to an approximation. The factor 0.58 indicates a pressure and temperature reduction in the opening which accompanies such a shock wave. The reason for this choice is that, in the case of a flow opening having a larger diameter, which yields a flow velocity in the flow opening lower than that at which a shock wave occurs, the air flow hardly experiences any friction and the pulling plug is therefore hardly energised. Starting from the shock wave condition, further reduction of the flow opening no longer yields a higher flow velocity but the volumetric flow $\Phi_v$ is limited and, consequently, also the drag force on the cable. A pulling plug having such a flow opening which is chosen as constant will certainly fulfil said shock wave condition quite reasonably in the first section of the conduit where the pressure gradient is still low and still changes but little. If this is also to be the case in the rest of the conduit, the size of the flow opening will have to change, specifically in a manner such that, with decreasing pressure $P_x$, the radius $r_h$ of the flow opening increases.

Of the three variants, to be described below, of the pulling plug according to the invention, the first is one having a constant flow opening, and the other two have pressure-regulated flow openings.

Example 1:

If a standard long-distance cable (having W=1N/m, B=1Nm$^2$ and $r_{cab}$=5mm) is installed in a conduit (having $r_{cond}$=13mm, f=0.2 (estimated)), which conduit exhibits undulations (having amplitude A=5cm and periodicity P=5m) with the aid of a compressor (having $P_0$=9.10$^5$Pa (=9bar) and $\Phi_v$=70 l/s) and mechanical feed-in means (having a deliverable pushing force of 100N), the calculated maximum installation length with a cable feed-in unit is 775m (see reference [5]). If a cable has, in addition, also an intrinsic curvature (having a bending radius $R_c$=0.3m), the calculated installation length drops to 690m, a reduction of approximately 11%.

In field tests, such an impairment of the installation result has in fact been observed. Use of a partially leaky pulling plug can eliminate the said reduction in installation length completely. In addition, the cable feed-in unit is able to operate with a less powerful motor for pressure drop compensation and exerting additional pushing forces.

5

Example 2:

In a field test, an attempt has been made to blow a flexible cable (having W=0.12N/m, B<0.01Nm$^2$ and $r_{cab}$=1.5 mm) into a 400 m-long conduit (having $r_{cond}$=6 mm, f=0.3 (estimated) and 16 right angle bends) with the aid of a compressor (having maximum $P_0$=8.10$^5$Pa (=8bar) and $\Phi_v$=10 l/s). Although the cable exhibited no intrinsic curvatures, it was not found to be possible to install the cable in the conduit because of buckling. No improvement was observed on using a pulling plug which sealed the conduit completely or just failed to seal it completely. If, however, a pulling plug suctionally sealing the conduit circumferentially and provided with a flow opening having a diameter of 2.6 mm which was determined with the aid of the shock wave condition of equation (2) was used, blowing-in proved to be very satisfactorily possible, whereas poorer results were again obtained in the event of deviations from the shock wave condition (diameters of 2.3 mm and 3.0 mm). All these features appear, however, to be in agreement with the theory according to reference [5]. For a completely flexible cable (that is to say $F_{ic}$ = 0), the latter results in a maximum installation length of 300 m under the above conditions. If, however, 5% of the blowing capacity, i.e. a pressure difference of 4.10$^4$Pa (=0.4bar) across the pulling plug, were used for a tensile force on the pulling plug, which amounts, in fact, to an overcompensation for $F_{ic}$, the calculated maximum installation length is 460 m.

Example 3:

In a field test, an attempt has been made to install a cable in a test section of 1000 m. The parameters of the cable and the conduit are as in Example 1. The cable conduit exhibited, however, fewer undulations and the cable did not have any appreciable intrinsic curvature. With the aid of a compressor ($P_0$ = 9.10$^5$Pa (=9bar) and $\Phi_V$ = 70 l/s) and mechanical feed-in means (with a deliverable pushing force of 100 N), it was possible for the cable to be fed into the conduit only up to a cable length of 250 m. If a pulling plug having a constant flow opening of 7 mm, which approximately conforms to the shock wave condition, was used an installation length of 750 m was found to be achievable.

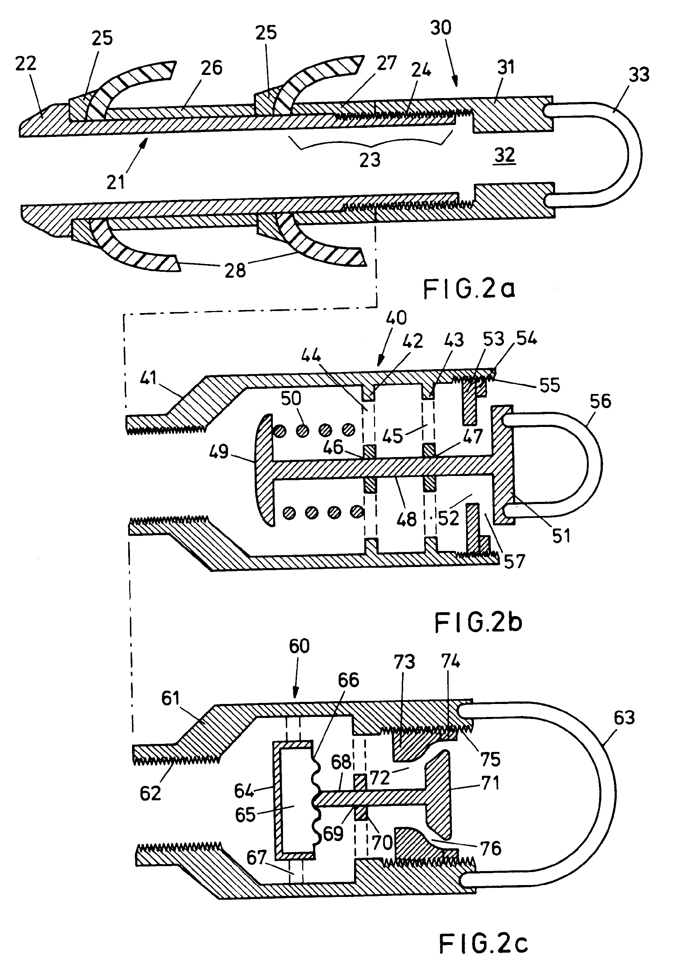

Three variants of a partially leaky pulling plug according to the invention are described with reference to Figure 2, with subsections a, b and c. The basis of these three variants is formed by a cylindrical hollow housing 21 provided with a thickened but rounded nose section 22. At least the end 23 is provided on the external circumference with a screw thread 24. Attached around the housing 21 by means of clamping between rings 25 and sleeve pieces 26 and 27 are small washers 28, which are capable of bringing about a suction seal with the inside wall 11 (see Figure 1) of a conduit 6 into which the pulling plug has to be fitted. At the same time, sleeve piece 27 can be screwed around the housing 21 by means of screw thread 24. Optionally, a connecting piece 30 as in subsection a), a connecting piece 40 as in subsection b) or a connecting piece 60 as in subsection c) of Figure 2 can be adjoiningly screwed onto said sleeve piece 27. A very simple variant of the partially leaky pulling plug is the one having connecting piece 30. Said connecting piece 30 is a more or less tubular continuation 31 of the housing 21, which continuation 31 incorporates a hole 32, having a constant diameter, which determines the air flow. Attached to the end of said tubular continuation 31 is a pulling eye 33 to which a cable can be firmly coupled in a tension-proof manner. The diameter of the hole 32 has been determined, preferably, with the aid of equation (2). As such a pulling plug thus provided with the connecting piece 30 travels further into the conduit during cable installation, and the air pressure starts to decrease more markedly, the pressure difference across the pulling plug, and consequently the force acting on the pulling plug, will increase. Beyond the critical point, however, where dF = 0, there is less need not only for overcompensation but even for compensation of the compressive force $F_{ic}$ as a consequence of the increasing drag action. In view of the fact that the tensile forces are at the expense of the drag forces as a consequence of the air flowing along the cable, it is desirable at least not to cause said tensile forces to increase in that section of the conduit, that is past dF = 0, but preferably to cause them to decrease. This can be achieved if the size of the flow opening increases with decreasing pressure. Connecting pieces 40 and 60 have a variable flow opening of this type.

Connecting piece 40 in subsection b) of Figure 2 comprises a more or less cylindrical housing 41 provided with partitions 42 and 43. Said partitions are provided with air passage openings 44 and 45 which can allow the air flow in the conduit to pass virtually unimpeded, and bores 46 and 47 through which a rod 48 can slide to and fro. At the side facing the housing 21, the end of the rod 48 is provided with a flange-like boundary 49 for a spring 50, which is provided around the rod 48 between said boundary 49 and the partition 42. Attached to the other end of the rod 48 is a disc-shaped valve 51. The rod 48 projects between the partition 43 and the valve 51 through an opening 52 of an adjustment ring 53 which can be locked with a retaining ring 54. The diameter of the opening 52 of the adjustment ring 53 is smaller than that of the valve 51. Both adjustment ring 53 and retaining ring 54 are fitted so as to screw along a screw thread 55 on the inside wall of the housing 41. A pulling eye 56 for a tension-proof coupling to a cable to be installed is attached to the valve 51. The space between the valve 51 and the adjustment ring 53, termed air passage 57, determines the air flow in this variant. With a particular energisation of this pulling plug by an air flow in the conduit, an equilibrium is established between the tensile force on the cable delivered by the pulling plug and the force which the spring 50 delivers. Under these circumstances, the air passage 57 has adjusted itself to a certain size. If the energisation of the pulling plug as a result of the air flow becomes greater, which corresponds to an increase in the difference in pressure on either side of the air passage 57, the size of the air passage 57 increases, but the extent of the energisation will decrease again as a result. A new equilibrium will be established. The size of said air passage 57 is so adjusted that, at the beginning of the installation path, the shock wave condition for a constant opening is fulfilled according to equation (2). In this connection, the characteristics of the spring 50 are such that the shock wave condition is fulfilled even for $P_x$. In this second variant, the construction is such that the valve 51 increases the air passage 57 in opposition to the spring pressure of the spring 50. Obviously, a construction is also possible in which the air passage 57 is decreased in opposition to a spring pressure, the pulling eye 56 then no longer being attached to the valve but to the housing 50.

The pulling plug according to the second variant will deliver over the entire length of the conduit a tensile force which, if not constant, is nevertheless adequately levelled off.

Connecting piece 60 as shown in subsection c) of Figure 2 also has a more or less cylindrical housing 61 which is provided, at the inside of one end of it, with a screw thread 62 fitting around the end 23 of the housing 21, and to which a pulling eye 63 is attached at the other end of it. A cylindrical drum 64 provided with a pressure chamber 65 and a membrane 66 is fitted coaxially in the cylindrical housing 61 and is kept in its place with the aid of rigid connections 67 originating from the inside wall of the housing 61. The distance of said drum 64 from the inside wall of the housing 61, and the dimensions of said rigid connections 67, are such that the remaining flow openings do not determine the air flow. The membrane 66 is coupled to an end of a rod 68 which is able to slide to and fro through an opening 69 in a dividing plate 70 provided in the housing 61. The rod 68 is essentially coaxial with the cylindrical housing 61. Attached to the other end of the rod 68 is a disc-shaped valve 71. The dividing plate 70 is provided with large flow openings such that these do not determine the air flow. Between the dividing plate 70 and the valve 71, the rod 68 projects through an opening 72 in an adjustment ring 73 which can be locked with a retaining ring 74. The diameter of the opening 72 of the adjustment ring 73 is smaller than that of the valve 71. Both adjustment ring 73 and retaining ring 74 can be screwed along a screw thread 75 which is provided on the inside wall of the housing 61. The space between the valve 71 and the adjustment ring 73, termed air passage 76, determines the air flow in this variant. The size of the air passage 76 is so adjusted that, for an existing pressure $P_0$, that is to say at the beginning of the installation path, the shock wave condition of equation (2) is fulfilled as well as possible. The membrane 66 has, under these circumstances, a certain state of pressing-in. As the pulling plug travels further into the conduit during installation and the air pressure decreases, the membrane 66 will be less pressed in and the valve 71 will open further via the rod 68. As a result of this, the air passage 76 is increased and the tensile force of the pulling plug 10 on the cable 4 (see Figure 1) will decrease. Valve 71 and adjustment ring 73 may be provided with a profile at the position of the air passage 76. As a result of suitable choice of said profile and of the deformability properties of the membrane 66, a tensile force, on a cable 4, which depends in a desired manner on the pressure existing locally in the conduit 6 can be achieved with a pulling plug provided with the connecting piece 60. This is, for example, such that the tensile force remains constant over the entire length of the conduit, or else that it decreases slowly as the cable is fed further into the conduit. With suitable choice of the membrane, in this variant the pulling eye 63 can also be attached to the valve 71.

## Claims

1. A method for installing a cable (4) into a conduit (6) with the aid of drag forces of a gaseous medium, which is inserted at the feed-in end (5) of the conduit and which flows rapidly along the cable (4) to a removal end (7) of the conduit, which method is characterized by the steps of

   connecting to a foremost end (8) of the cable, by means of a coupling of high tensile strength, a leaky pulling plug (10) of a design permitting the gaseous medium to leak therethrough with creation of a pressure difference ($P_x$ - $P_{x'}$) between forward and rear faces of the pulling plug during the rapid flow of the gaseous medium,

   inserting the leaky pulling plug (10) and the foremost cable end (8) into the feed-in end (5) of the conduit, and

   advancing the cable (4) into the conduit (6) by generating a rapid flow of the gaseous medium from the feed-in end (5) of the conduit along the cable (4) through the the leaky plug (10) and out through the removal end (7) of the conduit, while thereby exerting the drag forces on the cable in the conduit and exerting tensile forces on the foremost cable end (8) as a consequence of the pressure difference ($P_x$ - $P_{x'}$) at the pulling plug (10), which tensile forces assists the drag forces.

2. The method according to claim 1 characterized in that the pulling plug has a leaking aperture (12), the leaking effect of which varies as a function of the pressure.

3. The method according to claim 2 characterized in that the variation of the leaking effect varies as a function of the pressure difference ($P_x$ - $P_{x'}$) existing across the pulling plug (10) in a manner, and to an extent, such that the tensile force exerted on the foremost end of the cable is at least approximately constant during the step of advancing the cable into the conduit.

4. The method according to claim 2 characterized in that the leaking effect varies as a function of the pressure ($P_x$) existing in the immediate vicinity of the pulling plug in a manner and to an extent, such that the tensile force exerted on the foremost end of the cable does at least not increase with said pressure during the step of advancing the cable into the conduit.

5. The method according to any one of the claims 2, 3, or 4 characterized in that the leaking effect is produced by a leaking aperture (12) connecting the forward and rear faces of the plug, in the leaking aperture at least approximately the condition for the presence of a shock wave being fulfilled during the step of advancing the cable into the conduit.

6. The method according to any one of the preceeding claims 1-5 characterized in that the step of advancing comprises the simultaneous exertion of pushing forces acting on the cable in the longitudinal direction of the cable near the feed-in end of the conduit.

7. Pulling plug for carrying out the method according to one of the claims 1, --, 6, the pulling plug comprising
   - a mainly tubular housing (21, 31; 21, 41; 21, 61),
   - coupling means (33; 56; 63) for a tension-proof coupling to the foremost end of a cable to be installed,
   - sealing means (28) for a circumferential suction seal with the inside wall of the conduit, provided around said housing (21, 31; 21, 41; 21, 61), and
   - a leaking aperture (32; 57; 76) within said housing,
   characterized in that the leaking aperture (32; 57; 76) has a leaking capacity for allowving a flow of said gaseous medium along the part of the cable already introduced into the conduit during installation for exerting said drag forces on said part of the cable, with the creation of said pressure difference for energisation of the pulling plug resulting in said tensile force on the foremost end of the cable.

8. Pulling plug according to Claim 7, characterised in that the size of the leaking aperture (32; 57; 76) has been dimensioned for fulfilling at least approximately the condition for the presence of a shock wave in the leaking aperture during installation.

9. Pulling plug according to Claim 7 or 8, characterized in that the pulling plug is provided with pressure-dependent adjustment means (48,--,53; 64,--,73) which vary the size of the leaking aperture (57; 76) during installation.

10. Pulling plug according to Claim 9, characterised in that the adjustment means comprise a valve mechanism (48,--,53; 64,--,73) provided resiliently in the housing (21, 41; 21, 61), with which the size of the aperture (57; 76) can be varied.

11. Pulling plug according to Claim 10, characterised in that the valve mechanism is formed by
    - a pressure chamber (65) sealed with a membrane (66), the membrane being capable of being pressed in to a greater or lesser extent as a function of the pressure surrounding the pressure chamber,
    - a valve (71) coupled to the membrane (66) which partially seals the leaking aperture (76),
    the degree of sealing of the leaking aperture by the valve being determined by the degree of pressing-in of the membrane.

12. Pulling plug according to Claim 8, characterized in that the size of the leaking aperture (32) is fixedly choosen.

**Patentansprüche**

1. Verfahren zur Installation eines Kabels (4) in einem Schacht (6) mittels der Stosskräfte eines Gasmediums, das am Einführungsende (5) des Schachts (6) eingeleitet wird und das schnell das Kabel (4) entlang zu einem Entnahmeende (7) des Schachts (6) strömt, gekennzeichnet durch die Verfahrensschritte: dass am vorderen Kabelende (8) ein durchlässiger Zugstopfen (10) mittels einer starken zugfesten Verbindung am vorderen Kabelende (8) befestigt wird, wobei der Zugstopfen (10) eine derartige Form aufweist, dass das Gasmedium hindurchströmen kann und bei schnellen Durchströmen dieses Gasmediums ein Druckunterschied ($P_x$-$P_{x'}$) zwischen Vorder- und Rückwand des Zugstopfens (10) erzeugt wird, dass der durchlässige Zugstopfen (10) und das vordere Kabelende (8) in das Einführungsende (5) des Schachts (6) eingeführt werden, und dass das Kabel (4) im Schacht (6) vorwärts befördert wird, indem eine schnelle Strömung des Gasmediums vom Einführungsende (5) des Schachts (6) das Kabel (4) entlang durch den durchlässigen Zugstopfen (10) und durch das Entnahmeende (7) des Schachts (6) hinaus erzeugt wird, wobei im Schacht (6) auf das Kabel (4) Stosskräfte und auf das vordere Kabelende (8) Zugkräfte ausgeübt werden als Folge des Druckunterschieds ($P_x$-$P_{x'}$) bei Zugstopfen (10), und wobei die Zugkräfte die Stosskräfte unterstützen.

2. Verfahren nach Anspruch 1, dadurch gekennzeichnet, dass der Zugstopfen (10) eine Durchlassöffnung (12) aufweist, deren Durchlasswirkung in Abhängigkeit vom Druck variiert.

3. Verfahren nach Anspruch 2, dadurch gekennzeichnet, dass die Veränderung der Durchlasswirkung in Abhängigkeit vom Druckunterschied ($P_x$-$P_{x'}$), welcher durch den Zugstopfen (10) besteht, derart und in dem Masse variiert, dass die auf das vordere Kabelende (8) ausgeübte Zugkraft während des Schritts der Vorwärtsbeförderung des Kabels (4) im Schacht (6) mindestens annähernd konstant bleibt.

4. Verfahren nach Anspruch 2, dadurch gekennzeichnet, dass die Durchlasswirkung in Abhängigkeit vom Druck ($P_x$), welcher in der unmittelbaren nähe des Zugstopfens (10) besteht, derart und in dem Masse variiert, dass sich die auf das vordere Kabelende (8) ausgeübte Zugkraft während des Schritts der Vorwärtsbeförderung des Kabels (4) im Schacht (6) zumindest nicht mit dem erwähnten Druck erhöht.

5. Verfahren nach einem der Ansprüche 2, 3 oder 4, dadurch gekennzeichnet, dass die Durchlasswirkung von einer Durchlassöffnung (12) hervorgerufen wird, welche die Vorder- und Rückwand des Zugstopfens (10) miteinander verbindet, so dass während des Schritts der Vorwärtsbeförderung des Kabels (4) im Schacht (6) in der Durchlassöffnung (12) zumindest annähernd die Bedingung für das Vorhandensein einer Schockwelle erfüllt wird.

6. Verfahren nach einem der Ansprüche 1 bis 5, dadurch gekennzeichnet, dass der Schritt der Vorwärtsbeförderung die gleichzeitige Ausübung von Stosskräften umfasst, welche nahe dem Einführungsende (5) des Kabels (4) in dessen Längsrichtung wirken.

7. Zugstopfen zur Ausführung des Verfahrens nach einem der Ansprüche 1, --, 6, umfassend
   - ein im wesentlichen röhrenartiges Gehäuse (21, 31; 21, 41; 21, 61),
   - Befestigungsmittel (33; 56; 63) für eine zugfeste Befestigung des vorderen Endes (8) eines zu installierenden Kabels (4),
   - Dichtungsmittel (28) für eine umkreismässige Saugdichtung mit der Innenwand des Schachts (6), welche um das Gehäuse (21, 31; 21, 41; 21, 61) angebracht sind, und
   - eine Durchlassöffnung (32; 57; 76) im erwähnten Gehäuse, dadurch gekennzeichnet, dass sie eine Durchlasskapazität besitzt, die eine Strömung des erwähnten Gasmediums entlang dem während der Installation bereits eingeführten Kabelteil gestattet, um die erwähnten Stosskräfte auf diesen Kabelteil auszuüben, wodurch der erwähnte Druckunterschied zur Beschleunigung des Zugstopfens (10) erzeugt wird, was die erwähnten Zugkräfte auf das vordere Kabelende (8) zur Folge hat.

8. Zugstopfen nach Anspruch 7, dadurch gekennzeichnet, dass die Grösse der Durchlassöffnung (32; 57; 76) derart dimensioniert ist, dass während der Installation in der Durchlassöffnung zumindest annähernd die Bedingung für die Gegenwart einer schockwelle erfüllt wird.

9. Zugstopfen nach Anspruch 7 oder 8, dadurch gekennzeichnet, dass der Zugstopfen (10) mit druckabhängigen Einstellmitteln (48, --, 53); 64, --, 73) versehen ist, welche während der Installation die Grösse der Durchlassöffnung (57; 76) variieren.

**10.** Zugstopfen nach Anspruch 9, dadurch gekennzeichnet, dass die Einstellmittel einen Ventilmechanismus (48, --, 53; 64,--, 73) umfassen, der federnd im Gehäuse (21, 41; 21, 61) angeordnet ist, und mit dem die Grösse der Oeffnung (57; 76) variiert werden kann.

**11.** Zugstopfen nach Anspruch 10, dadurch gekennzeichnet, dass der Ventilmechanismus gebildet wird durch:
- eine mit einer Membran (66) abgeschlossenen Druckkammer (65), wobei die Membran (66) in Abhängigkeit vom Druck, welcher die Druckkammer (65) umgibt, mehr oder weniger eingedrückt werden kann, und
- ein an der Membran (66) befestigtes Ventil (71), dass die Durchlassöffnung (76) teilweise abdichtet, wobei der Dichtungsgrad der Durchlassöffnung (76) durch das Ventil (71) vom Eindrückgrad der Membran (66) bestimmt wird.

**12.** Zugstopfen nach Anspruch 8, dadurch gekennzeichnet, dass die Grösse der Durchlassöffnung (32) unveränderbar gewählt wird.

**Revendications**

**1.** Procédé de mise en place d'un câble (4) dans un conduit (6) à l'aide de forces d'entraînement d'un moyen gazeux, qui est introduit à l'extrémité d'introduction (5) du conduit et qui s'écoule rapidement le long du câble (4) jusqu'à une extrémité de sortie (7) du conduit, lequel procédé est caractérisé par les étapes :
de raccordement d'une extrémité la plus en avant (8) du câble, au moyen d'un accouplement ayant une résistance à la traction élevée, d'un bouchon de tirage non étanche (10) d'une conception permettant au moyen gazeux de le traverser en créant une différence de pression ($P_x$ - $P_{x'}$) entre les faces avant et arrière du bouchon de tirage pendant l'écoulement rapide du moyen gazeux ;
d'introduction du bouchon de tirage non étanche (10) et de l'extrémité de câble la plus en avant (8) dans l'extrémité d'entrée (5) du conduit ; et
d'avancée du câble (4) dans le conduit (6) en produisant un écoulement rapide du moyen gazeux à partir de l'extrémité d'entrée (5) du conduit, le long du câble (4), à travers le bouchon de tirage non étanche (10), et par l'extrémité de sortie (7) du conduit, tout en exerçant par ce moyen les forces d'entraînement sur le câble dans le conduit et en exerçant des forces de traction sur l'extrémité de câble la plus en avant (8) comme conséquence de la différence de pression ($P_x$ - $P_{x'}$) au droit du bouchon de tirage (10), lesquelles forces de traction assistent les forces d'entraînement.

**2.** Procédé selon la revendication 1, caractérisé en ce que le bouchon de tirage possède une ouverture de fuite (12), dont l'effet de fuite varie en fonction de la pression.

**3.** Procédé selon la revendication 2, caractérisé en ce que la variation de l'effet de fuite est fonction de la différence de pression ($P_x$ - $P_{x'}$) existante entre les deux faces du bouchon de tirage (10) d'une façon, et dans une mesure, telles que la force de traction exercée sur l'extrémité la plus en avant du câble soit au moins approximativement constante pendant l'étape d'avancée du câble dans le conduit.

**4.** Procédé selon la revendication 2, caractérisé en ce que l'effet de fuite est fonction de la pression ($P_x$) existante au voisinage immédiat du bouchon de tirage d'une manière, et dans une mesure, telles que la force de traction exercée sur l'extrémité du câble la plus en avant au moins n'augmente pas avec ladite pression pendant l'étape d'avancée du câble dans le conduit.

**5.** Procédé selon l'une quelconque des revendications 2, 3, ou 4, caractérisé en ce que l'effet de fuite est produit par une ouverture de fuite (12) reliant les faces avant et arrière du bouchon, la condition pour la présence d'une onde de choc étant, au moins approximativement, remplie dans l'ouverture de fuite, pendant l'étape d'avancée du câble dans le conduit.

**6.** Procédé selon l'une quelconque des revendications 1 à 5 précédentes, caractérisé en ce que l'étape d'avancée comprend l'application simultanée de forces de poussée agissant sur le câble dans la direction longitudinale du câble près de l'extrémité d'introduction du conduit.

**7.** Bouchon de tirage pour mettre en oeuvre le procédé selon l'une des revendications 1 à 6, le bouchon de tirage comprenant :

un boîtier globalement tubulaire (21, 31 ; 21, 41 ; 21, 61) ;

des moyens d'accouplement (33 ; 56 ; 63) pour un accouplement résistant à la traction à l'extrémité la plus en avant d'un câble à mettre en place ;

des moyens d'étanchéité (28) pour une étanchéité circonférentielle par effet de succion avec la paroi intérieure du conduit, disposés tout autour dudit boîtier (21, 31 ; 21, 41 ; 21, 61) ; et

une ouverture de fuite (32 ; 57 ; 76) à l'intérieur dudit boîtier ;

caractérisé en ce que l'ouverture de fuite (32 ; 57 ; 76) possède une capacité de fuite pour permettre un écoulement dudit moyen gazeux le long d'une partie du câble déjà introduite dans le conduit lors de la mise en place pour exercer lesdites forces d'entraînement sur ladite partie du câble, la création de ladite différence de pression pour propulser le bouchon de tirage ayant pour résultat ladite force de traction sur l'extrémité la plus en avant du câble.

8. Bouchon de tirage selon la revendication 7, caractérisé en ce que la dimension de l'ouverture de fuite (32 ; 57 ; 76) a été dimensionnée pour satisfaire au moins approximativement la condition pour la présence d'une onde de choc dans l'ouverture de fuite pendant la mise en place.

9. Bouchon de tirage selon la revendication 7 ou 8, caractérisé en ce que le bouchon de tirage est muni d'un moyen de réglage fonction de la pression (48,..., 53 ; 64,...,73) qui modifie la dimension de l'ouverture de fuite (57 ; 76) pendant la mise en place.

10. Bouchon de tirage selon la revendication 9, caractérisé en ce que le moyen de réglage comprend un mécanisme à clapet (48,..., 53 ; 64,....73) disposé de manière élastique dans le boîtier (21, 41 ; 21, 61), par lequel la dimension de l'ouverture (57 ; 76) peut être modifiée.

11. Bouchon de tirage selon la revendication 10, caractérisé en ce que le mécanisme à clapet est formé par :

une chambre de pression (65) fermée de manière étanche par une membrane (66), la membrane pouvant être pressée dans une plus grande ou plus petite mesure en fonction de la pression entourant la chambre de pression ;

un clapet (71) accouplé à la membrane (66) qui ferme partiellement l'ouverture de fuite (76) ;

le degré de fermeture de l'ouverture de fuite par le clapet étant déterminé par le degré de pression à l'intérieure de la membrane ;

12. Bouchon de tirage selon la revendication 8, caractérisé en ce que la dimension de l'ouverture de fuite (32) est choisie de manière fixe.

FIG.1

FIG.2a

FIG.2b

FIG.2c